# EUROPÄISCHE PATENTANMELDUNG

(11) **EP 3 502 742 A1**
(43) Veröffentlichungstag der Anmeldung: **26.06.2019**
(21) Anmeldenummer: 17209231.4
(22) Anmeldetag: 21.12.2017
(51) Int. Cl.: G01S 17/02, G01C 15/00, G01S 17/66

(54) **VERFAHREN ZUM SUCHEN EINES ZIELOBJEKTES**

(71) Anmelder: HILTI Aktiengesellschaft, 9494 Schaan (LI)
(72) Erfinder: Gloor, Thomas, 9495 Triesen (LI)
(74) Vertreter: Hilti Aktiengesellschaft Corporate Intellectual Property

(57) **Zusammenfassung**

Verfahren zum Suchen eines Zielobjektes (14), das entlang eines Weges bewegt wird, mittels eines Messgerätes (11), einer Kontrolleinrichtung und eines Bediencontrollers (12), der einen GNSS-Empfänger aufweist und der über eine Kommunikationsverbindung (13) mit dem Messgerät (11) verbindbar ist.

## Beschreibung

### Technisches Gebiet

Die vorliegende Erfindung betrifft ein Verfahren zum Suchen eines Zielobjektes gemäß dem Oberbegriff des Anspruchs 1 sowie eine Vorrichtung zur Durchführung eines solchen Verfahrens gemäß dem Oberbegriff des Anspruchs 11.

### Stand der Technik

Während der Verfolgung eines Zielobjektes durch ein Messgerät kann es dazu kommen, dass das Messgerät den Kontakt zum Zielobjekt verliert und in der Messposition des Zielobjektes keine Messkoordinaten bestimmen kann. Diese Situation wird auch als "Loss of Contact" bezeichnet. Um die Suche des Zielobjektes zu verbessern und die dazu erforderliche Zeit zu reduzieren, sind aus dem Stand der Technik verschiedene Maßnahmen bekannt. Aktive Zielobjekte können im Falle eines "Loss of Contact" ein Signal aussenden, das vom Messgerät empfangen wird. Allerdings haben aktive Zielobjekte gegenüber passiven Zielobjekten den Nachteil, dass sie eine Energieversorgung benötigen.

### Darstellung der Erfindung

Die Aufgabe der vorliegenden Erfindung besteht darin, ein Verfahren zum Suchen eines passiven Zielobjektes zu entwickeln, bei dem der apparative Aufwand reduziert ist und keine zusätzlichen Komponenten für die Suche des passiven Zielobjektes erforderlich sind.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das erfindungsgemäße Verfahren zum Suchen eines Zielobjektes, das entlang eines Weges bewegt wird, mittels eines Messgerätes, das ein erstes Bezugssystem aufweist, einer Kontrolleinrichtung und eines Bediencontrollers, der einen GNSS-Empfänger mit einem zweiten Bezugssystem aufweist und der über eine Kommunikationsverbindung mit dem Messgerät verbindbar ist, umfasst die Schritte:
▪ für den Fall, dass das Messgerät den Kontakt zum Zielobjekt verloren hat, werden mittels des GNSS-Empfängers aktuelle Positionskoordinaten des Bediencontrollers im zweiten Bezugssystem bestimmt,
▪ die aktuellen Positionskoordinaten des Bediencontrollers werden von der Kontrolleinrichtung mittels einer bekannten Transformationsfunktion aus dem zweiten Bezugssystem in transformierte Positionskoordinaten im ersten Bezugssystem transformiert,
▪ aus den transformierten Positionskoordinaten des Bediencontrollers im ersten Bezugssystem wird von der Kontrolleinrichtung für das Messgerät eine Startorientierung bestimmt, wobei das Messgerät in der Startorientierung auf den Bediencontroller ausgerichtet ist, und
▪ das Messgerät wird gemäß einer voreingestellten Routine zum Suchen des Zielobjektes bewegt.

Das erfindungsgemäße Verfahren zum Suchen eines Zielobjektes hat den Vorteil, dass ein bereits vorhandener GNSS-Empfänger des Bediencontrollers genutzt wird, um eine Startorientierung für das Messgerät zur Suche des passiven Zielobjektes zu bestimmen, so dass keine zusätzliche Komponente erforderlich ist und der apparative Aufwand reduziert ist. Die aktuelle Position des Bediencontrollers kann dazu genutzt werden, die Suche nach einem Zielobjekt zu verbessern, da der Bediener im Ein-Mann-Betrieb das Zielobjekt entlang des Weges bewegt und den Bediencontroller bei sich führt. Je geringer die Distanz zwischen dem Zielobjekt und dem Bediencontroller ist, umso geringer ist die Abweichung zwischen der Position des Bediencontrollers und der Position des Zielobjektes.

Wenn das Messgerät den Kontakt zum Zielobjekt verloren hat, gibt die Kontrolleinrichtung einen Befehl an den GNSS-Empfänger, aktuelle Positionskoordinaten des Bediencontrollers im zweiten Bezugssystem zu bestimmen. Die aktuellen Positionskoordinaten des Bediencontrollers werden von der Kontrolleinrichtung mittels einer bekannten Transformationsfunktion aus dem zweiten Bezugssystem in transformierte Positionskoordinaten im ersten Bezugssystem transformiert. Aus den transformierten Positionskoordinaten des Bediencontrollers im ersten Bezugssystem bestimmt die Kontrolleinrichtung eine Startorientierung für das Messgerät, wobei das Messgerät in der Startorientierung auf den Bediencontroller ausgerichtet ist. Ausgehend von der Startorientierung wird das Messgerät gemäß einer voreingestellten Routine bewegt, um das Zielobjekt zu suchen.

Bevorzugt werden während der Bewegung des Zielobjektes entlang des Weges in M, M ≥ 2 Messpositionen des Zielobjektes mittels des Messgerätes i-te Messkoordinaten im ersten Bezugssystem des Messgerätes bestimmt und in N, N ≥ 2 Positionen des Bediencontrollers mittels des GNSS-Empfängers j-te GNSS-Koordinaten des Bediencontrollers im zweiten Bezugssystem bestimmt, wobei die i-ten Messkoordinaten vom Messgerät an die Kontrolleinrichtung und die j-ten GNSS-Koordinaten vom GNSS-Empfänger an die Kontrolleinrichtung übermittelt werden. Die i-ten Messkoordinaten und die j-ten GNSS-Koordinaten werden dazu genutzt, die Transformationsfunktion zwischen dem zweiten Bezugssystem und dem ersten Bezugssystem zu bestimmen. Die Transformationsfunktion ist notwendig, um die aktuelle Position des Bediencontrollers im ersten Bezugssystem bestimmen zu können.

In einer ersten Variante werden den i-ten Messkoordinaten vom Messgerät i-te Zeitstempel und/oder den j-ten GNSS-Koordinaten vom GNSS-Empfängerj-te Zeitstempel zugeordnet und die i-ten Zeitstempel und/oder j-ten Zeitstempel werden an die Kontrolleinrichtung übermittelt. Die i-ten Zeitstempel und j-ten Zeitstempel ermöglichen eine Zuordnung der Messkoordinaten und GNSS-Koordinaten, um die Transformationsfunktion zwischen dem zweiten Bezugssystem und ersten Bezugssystem zu bestimmen.

In einer zweiten Variante werden den i-ten Messkoordinaten von der Kontrolleinrichtung i-te Zeitstempel und/oder den j-ten GNSS-Koordinaten von der Kontrolleinrichtung j-te Zeitstempel zugeordnet. Wenn das Messgerät und/oder der GNSS-Empfänger nicht über eine Zeiteinrichtung verfügen, kann die Kontrolleinrichtung die Zeitstempel bei der Übertragung zuordnen.

Besonders bevorzugt werden i-ten Messkoordinaten von der Kontrolleinrichtung j-te GNSS-Koordinaten zugeordnet, wenn die Zeitdifferenz zwischen dem i-ten Zeitstempel der i-ten Messkoordinaten und dem j-ten Zeitstempel der j-ten GNSS-Koordinaten minimal ist.

Besonders bevorzugt werden i-ten Messkoordinaten von der Kontrolleinrichtung j-te GNSS-Koordinaten zugeordnet, wenn die Zeitdifferenz zwischen dem i-ten Zeitstempel der i-ten Messkoordinaten und dem j-ten Zeitstempel der j-ten GNSS-Koordinaten kleiner als eine voreingestellte maximale Zeitdifferenz ist.

Die Zuordnung von i-ten Messkoordinaten zu j-ten GNSS-Koordinaten ist erforderlich, um die Transformationsfunktion zwischen dem zweiten Bezugssystem und dem ersten Bezugssystem bestimmen zu können. Die richtige Zuordnung zwischen i-ten Messkoordinaten und j-ten GNSS-Koordinaten ist vor allem für schnell bewegte Zielobjekte wichtig, um Ungenauigkeiten zu reduzieren.

Die Kontrolleinrichtung bestimmt für die i-ten Messkoordinaten und j-ten GNSS-Koordinaten jeweils eine Zeitdifferenz und ordnet den i-ten Messkoordinaten des Zielobjektes diejenigen j-ten GNSS-Koordinaten zu, die die kleinste Zeitdifferenz aufweisen. Die Zuordnung der i-ten Zeitstempel zu den i-ten Messkoordinaten und der j-ten Zeitstempel zu den j-ten GNSS-Koordinaten kann bereits bei der Bestimmung der i-ten Messkoordinaten und j-ten GNSS-Koordinaten erfolgen oder die Zeitstempel werden den i-ten Messkoordinaten und j-ten GNSS-Koordinaten bei der Übermittlung an die Kontrolleinrichtung von der Kontrolleinrichtung zugeordnet.

Eine erste bevorzugte Variante umfasst die Schritte:
▪ die i-ten Messkoordinaten und i-ten Zeitstempel werden von der Kontrolleinrichtung als erste Datenpunkte bestimmt,
▪ für die ersten Datenpunkte wird von der Kontrolleinrichtung eine erste Fitkurve angepasst,
▪ aus der ersten Fitkurve werden von der Kontrolleinrichtung zu ersten Zeitpunkten erste Näherungskoordinaten bestimmt, wobei die ersten Zeitpunkte den j-ten Zeitstempel der j-ten GNSS-Koordinaten entsprechen, und
▪ die Transformationsfunktion zwischen dem zweiten Bezugssystem und dem ersten Bezugssystem wird von der Kontrolleinrichtung zumindest teilweise mittels der ersten Näherungskoordinaten und der j-ten GNSS-Koordinaten bestimmt.

Eine zweite bevorzugte Variante umfasst die Schritte:
▪ die j-ten GNSS-Koordinaten und j-ten Zeitstempel werden von der Kontrolleinrichtung als zweite Datenpunkte bestimmt,
▪ für die zweiten Datenpunkte wird von der Kontrolleinrichtung eine zweite Fitkurve angepasst,
▪ aus der zweiten Fitkurve werden von der Kontrolleinrichtung zu zweiten Zeitpunkten zweite Näherungskoordinaten bestimmt, wobei die zweiten Zeitpunkte den i-ten Zeitstempeln der i-ten Messkoordinaten entsprechen, und
▪ die Transformationsfunktion zwischen dem zweiten Bezugssystem und dem ersten Bezugssystem wird von der Kontrolleinrichtung zumindest teilweise mittels der i-ten Messkoordinaten und zweiten Näherungskoordinaten bestimmt.

Eine dritte bevorzugte Variante umfasst die Schritte:
▪ die i-ten Messkoordinaten und i-ten Zeitstempel werden von der Kontrolleinrichtung als erste Datenpunkte bestimmt und für die ersten Datenpunkte wird von der Kontrolleinrichtung eine erste Fitkurve angepasst,
▪ die j-ten GNSS-Koordinaten und j-ten Zeitstempel werden von der Kontrolleinrichtung als zweite Datenpunkte bestimmt und für die zweiten Datenpunkte wird von der Kontrolleinrichtung eine zweite Fitkurve angepasst,
▪ von der Kontrolleinrichtung werden zu vorgegebenen Zeitpunkten aus der ersten Fitkurve erste Näherungskoordinaten und aus der zweiten Fitkurve zweite Näherungskoordinaten bestimmt und
▪ die Transformationsfunktion zwischen dem zweiten Bezugssystem und dem ersten Bezugssystem wird von der Kontrolleinrichtung zumindest teilweise mittels der ersten Näherungskoordinaten und zweiten Näherungskoordinaten bestimmt.

Die Vorrichtung zur Durchführung eines Verfahrens zum Suchen eines Zielobjektes weist ein Messgerät, eine Kontrolleinrichtung, einen Bediencontroller, der einen GNSS-Empfänger aufweist, und eine Kommunikationsverbindung, die das Messgerät und den Bediencontroller miteinander verbindet, auf.

In einer ersten bevorzugten Variante ist der GNSS-Empfänger fest im Bediencontroller eingebaut. Bei einem Bediencontroller mit fest eingebautem GNSS-Empfänger ist keine zusätzliche Komponenten für die Suche nach einem passiven Zielobjekt erforderlich.

In einer zweiten bevorzugten Variante ist der GNSS-Empfänger über eine Datenschnittstelle mit dem Bediencontroller verbunden. Die Möglichkeit, den GNSS-Empfänger über eine Datenschnittstelle zu verbinden, ermöglicht die Verwendung von Bediencontrollern die keinen fest eingebauten GNSS-Empfänger aufweisen. Jeder externe GNSS-Empfänger, der über eine Datenschnittstelle mit dem Bediencontroller verbindbar ist, unterstützt die Suche nach einem passiven Zielobjekt.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine Vorrichtung mit einem Messgerät, einem Bediencontroller und einer Kommunikationsverbindung in einer dreidimensionalen Darstellung (FIG. 1A) und in einem Blockdiagramm (FIG. 1B);
- FIGN. 2A, B: eine Anordung, in der das Messgerät den Kontakt zu einem Zielobjekt verloren hat und ein erfindungsgemäßes Verfahren zum Suchen eines Zielobjektes zur Anwendung kommt; und
- FIG. 3: ein Szenario, mit dem eine Transformationsfunktion zwischen einem zweiten Bezugssystem eines GNSS-Empfängers und einem ersten Bezugssystem des Messgerätes bestimmt werden kann.

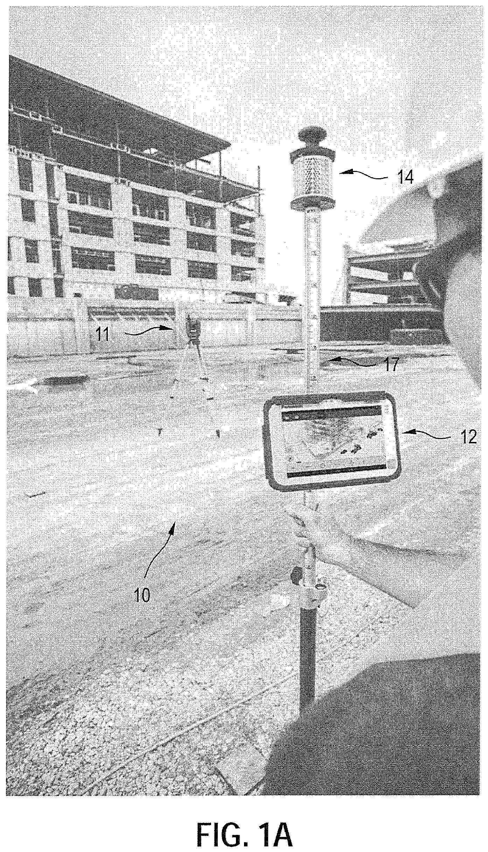

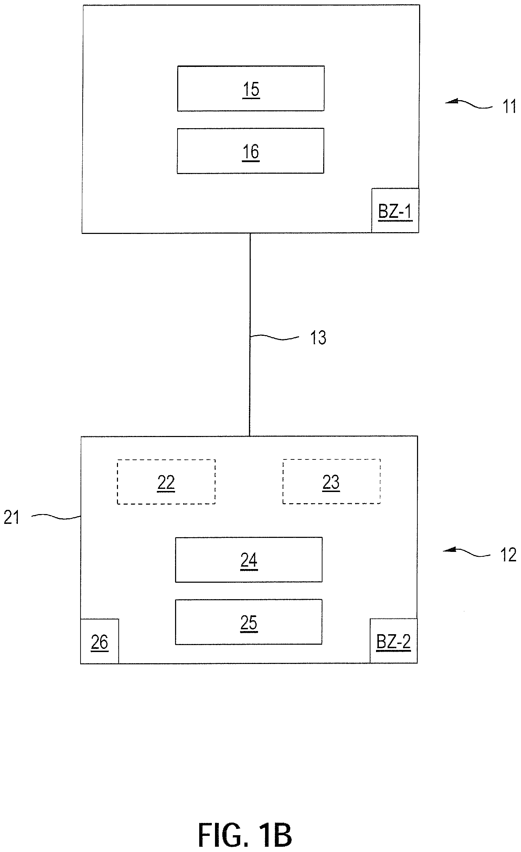

**FIGN. 1A****, B** zeigen eine Vorrichtung **10,** die ein Messgerät **11,** einen Bediencontroller **12** und eine Kommunikationsverbindung **13** umfasst, zur Durchfürhung eines erfindungsgemäßen Verfahrens zur Suche eines Zielobjektes. FIG. 1A zeigt die Vorrichtung in einer dreidimensionalen Darstellung und FIG. 1B den Aufbau der Vorrichtung 10 in einer Blockdarstellung.

Die Kommunikationsverbindung 13 verbindet das Messgerät 11 und den Bediencontroller 12 miteinander und ist als kabellose Kommunikationsverbindung ausgebildet. Als kabellose Kommunikationsverbindung eignen sich sämtliche bekannten Technologien zum Datentransfer, wie beispielsweise Bluetooth, Funk, WiFi, Infrarot, etc. Das Messgerät 11 ist als Totalstation ausgebildet und dient unter anderem dazu, ein Zielobjekt **14** zu verfolgen; das Zielobjekt 14 ist als passives Zielobjekt ausgebildet. Das Messgerät 11 umfasst eine Distanzmesseinheit **15** und eine Winkelmesseinheit **16.** Das Zielobjekt 14 ist an einem Haltestab **17** befestigt und wird von einem Bediener bewegt. Am Haltestab 17 kann ein Aufnahmeelement befestigt sein, das den Bediencontroller 12 aufnimmt; alternativ kann der Bediener den Bediencontroller 12 während der Bewegung des Haltestabes 17 in der Hand halten.

Während der Verfolgung des Zielobjektes 14 durch das Messgerät 11 kann es dazu kommen, dass das Messgerät 11 den Kontakt zum Zielobjekt 14 verliert und in der Messposition des Zielobjektes 14 keine Messkoordinaten bestimmen kann. Diese Situation wird auch als "Loss of Contact" bezeichnet. Um die Suche nach dem Zielobjekt 14 zu verbessern und die dazu erforderliche Zeit zu reduzieren, kann die Vorrichtung 10 ein erfindungsgemäßes Verfahren zum Suchen des Zielobjektes 14 ausführen.

Der Bediencontroller 12 umfasst ein Gehäuse **21,** eine Kontrolleinrichtung **22,** die innerhalb des Gehäuses 21 angeordnet ist, einen GNSS-Empfänger **23,** der innerhalb des Gehäuses 21 angeordnet ist, eine Bedieneinrichtung **24** und eine Anzeigeeinrichtung **25.** Der GNSS-Empfänger 23 ist im Ausführungsbeispiel fest im Gehäuse 21 eingebaut, alternativ kann der GNSS-Empfänger als externer GNSS-Empfänger ausgebildet sein und über eine Datenschnittstelle **26** des Bediencontrollers 12 mit der Kontrolleinrichtung 22 verbunden werden.

Die Bedieneinrichtung 24 und Anzeigeeinrichtung 25 sind im Ausführungsbeispiel als separate Elemente in Form einer Tastatur und eines Displays ausgebildet, alternativ können die Bedieneinrichtung 24 und Anzeigeeinrichtung 25 gemeinsam in einem Touchscreen integriert sein. Die Bedieneinrichtung 24 und Anzeigeeinrichtung 25 sind in das Gehäuse 21 des Bediencontrollers 12 eingelassen und fest mit dem Gehäuse 21 verbunden, alternativ können die Bedieneinrichtung 24, die Anzeigeeinrichtung 25 oder die Bedien- und Anzeigeeinrichtung 24, 25 als separate Elemente ausgebildet sein und über eine Datenschnittstelle (USB, Bluetooth, WiFi) mit der Kontrolleinrichtung 22 verbunden werden.

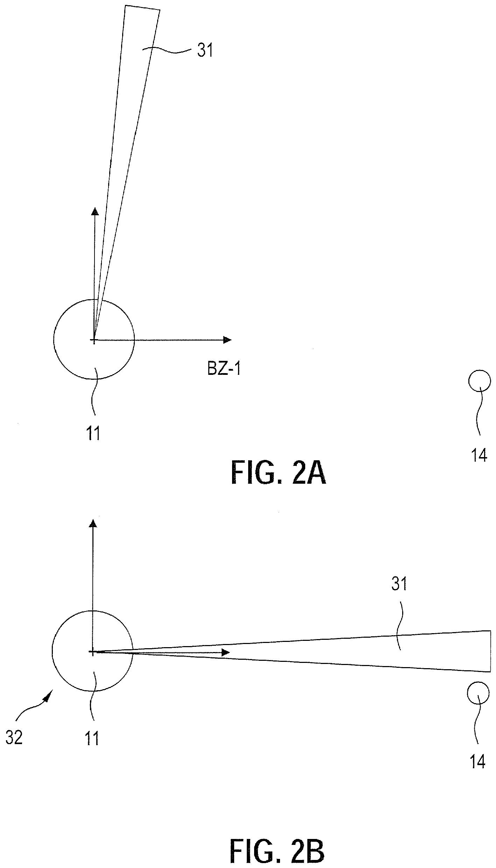

**FIGN. 2A****, B** zeigen schematisch eine Anordung, in der das Messgerät 11 den Kontakt zum Zielobjekt 14 verloren hat und das erfindungsgemäße Verfahren zum Suchen eines Zielobjektes zur Anwendung kommt. FIG. 1A zeigt das Messgerät 11 in einer Orientierung, in der sich das Zielobjekt 14 ausserhalb eines Sichtfeldes **31** des Messgerätes 11 befindet; das Messgerät 11 hat den Kontakt zum Zielobjekt 14 verloren.

Die Durchführung des erfindungsgemäßen Verfahrens zum Suchen eines Zielobjektes wird von der Kontrolleinrichtung 22 des Bediencontrollers 12 gesteuert. Die Kontrolleinrichtung 22 gibt einen Befehl an den GNSS-Empfänger 23, aktuelle Positionskoordinaten **Pₐₖₜ** des Bediencontrollers 12 im zweiten Bezugssystem BZ-2 des GNSS-Empfängers 23 zu bestimmen. Die aktuellen Positionskoordinaten Pₐₖₜ des Bediencontrollers 12 werden von der Kontrolleinrichtung 22 mittels einer bekannten Transformationsfunktion in transformierte Positionskoordinaten im ersten Bezugssystem BZ-1 des Messgerätes 11 transformiert. Anschliessend bestimmt die Kontrolleinrichtung 22 aus den transformierten Positionskoordinaten des Bediencontrollers 12 eine Startorientierung **32** für das Messgerät 11. Dabei entspricht die Startorientierung 32 einer Orientierung des Messgerätes 11, in der das Messgerät 11 auf die transformierten Positionskoordinaten des Bediencontrollers 12 ausgerichtet ist. Das Messgerät 11 wird ausgehend von der Startorientierung 32 gemäß einer voreingestellten Routine bewegt, um das Zielobjekt 14 zu suchen.

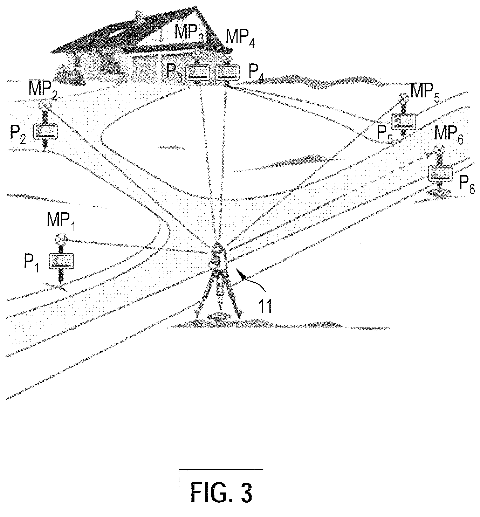

Das erfindungsgemäße Verfahren zum Suchen eines Zielobjektes setzt voraus, dass die Transformationsfunktion zwischen dem zweiten Bezugssystem BZ-2 und dem ersten Bezugssystem BZ-1 bekannt ist. **FIG. 3** zeigt ein Szenario, mit dem die Transformationsfunktion bestimmt werden kann. Das Zielobjekt 14 wird von einem Bediener entlang eines Weges bewegt. In mehreren Messpositionen des Zielobjektes 14 werden vom Messgerät 11 Messkoordinaten erfasst und in mehreren Positionen des Bediencontrollers 12 werden vom GNSS-Empfänger 23 GNSS-Koordinaten erfasst. Das Ausführungsbeispiel zeigt sechs Messpositionen des Zielobjektes 14 und sechs Positionen des Bediencontrollers 12. Im allgemeinen Fall ist das Zielobjekt 14 in **M** verschiedenen Messpositionen **MP**ᵢ, i = 1...M, angeordnet und der Bediencontroller 12 ist in **N** verschiedenen Positionen **Pⱼ**, j = 2...N angeordnet. Die Anzahl M und N können gleich oder verschieden sein. In jeder Messposition MPᵢ bestimmt das Messgerät 11 für das Zielobjekt 14 i-te Messkoordinaten **MKᵢ** i = 1...M, wobei die i-ten Messkoordinaten **MKᵢ** in einem ersten Bezugssystem **BZ-1** des Messgerätes 11 erfasst werden. In jeder Position Pⱼ bestimmt der GNSS-Empfänger 23 j-te GNSS-Koordinaten **Kⱼ**, j = 1 ... N für den Bediencontroller 12, wobei die j-ten GNSS-Koordinaten Kⱼ in einem zweiten Bezugssystem **BZ-2** des GNSS-Empfängers 23 erfasst werden.

In einer ersten Variante werden die i-ten Messkoordinaten MKᵢ und i-ten Zeitstempel tᵢ von der Kontrolleinrichtung 22 als erste Datenpunkte bestimmt. Für die ersten Datenpunkte passt die Kontrolleinrichtung 22 eine erste Fitkurve an, wobei bekannte Fitkurven verwendet werden können. Die Kontrolleinrichtung 22 bestimmt zu ersten Zeitpunkten τ₁ₖ aus der ersten Fitkurve erste Näherungskoordinaten, wobei die ersten Zeitpunkte τ₁ₖ den j-ten Zeitstempeln Tⱼ der j-ten GNSS-Koordinaten Kⱼ entsprechen. Die Kontrolleinrichtung 22 bestimmt die Transformationsfunktion zwischen dem zweiten Bezugssystem BZ-2 des GNSS-Empfängers 23 und dem ersten Bezugssystem BZ-1 des Messgerätes 11 mithilfe der ersten Näherungskoordinaten und der j-ten GNSS-Koordinaten Kⱼ.

In einer zweiten Variante werden die j-ten GNSS-Koordinaten Kⱼ und j-ten Zeitstempel Tⱼ von der Kontrolleinrichtung 22 als zweite Datenpunkte bestimmt. Für die zweiten Datenpunkte passt die Kontrolleinrichtung 22 eine zweite Fitkurve an, wobei bekannte Fitkurven verwendet werden können. Die Kontrolleinrichtung 22 bestimmt zu zweiten Zeitpunkten τ₂ₖ aus der zweiten Fitkurve zweite Näherungskoordinaten, wobei die zweiten Zeitpunkte τ₂ₖ den i-ten Zeitstempel tᵢ der i-ten Messkoordinaten entsprechen. Die Kontrolleinrichtung 22 bestimmt die Transformationsfunktion zwischen dem zweiten Bezugssystem BZ-2 des GNSS-Empfängers 23 und dem ersten Bezugssystem BZ-1 des Messgerätes 11 mithilfe der i-ten Messkoordinaten MKᵢ und der zweiten Näherungskoordinaten.

In einer dritten Variante werden die i-ten Messkoordinaten MKᵢ und i-ten Zeitstempel tᵢ von der Kontrolleinrichtung 22 als erste Datenpunkte bestimmt und für die ersten Datenpunkte wird von der Kontrolleinrichtung 22 eine erste Fitkurve angepasst. Die j-ten GNSS-Koordinaten Pⱼ und j-ten Zeitstempel Tⱼ werden von der Kontrolleinrichtung 22 als zweite Datenpunkte bestimmt und für die zweiten Datenpunkte wird von der Kontrolleinrichtung 22 eine zweite Fitkurve angepasst. Die Kontrolleinrichtung 22 bestimmt zu vorgegebenen Zeitpunkten τₖ erste Näherungskoordinaten aus der ersten Fitkurve und zweite Näherungskoordinaten aus der zweiten Fitkurve. Die Kontrolleinrichtung 22 bestimmt die Transformationsfunktion zwischen dem zweiten Bezugssystem BZ-2 des GNSS-Empfängers 23 und dem ersten Bezugssystem BZ-1 des Messgerätes 11 mithilfe der ersten Näherungskoordinaten und zweiten Näherungskoordinaten.

## Patentansprüche

1. Verfahren zum Suchen eines Zielobjektes (14), das entlang eines Weges bewegt wird, mittels eines Messgerätes (11), das ein erstes Bezugssystem (BZ-1) aufweist, einer Kontrolleinrichtung (22) und eines Bediencontrollers (12), der einen GNSS-Empfänger (23) mit einem zweiten Bezugssystem (BZ-2) aufweist und der über eine Kommunikationsverbindung (13) mit dem Messgerät (11) verbindbar ist, mit den Schritten:
▪ für den Fall, dass das Messgerät (11) den Kontakt zum Zielobjekt (14) verloren hat, werden mittels des GNSS-Empfängers (23) aktuelle Positionskoordinaten des Bediencontrollers (12) im zweiten Bezugssystem (BZ-2) bestimmt,
▪ die aktuellen Positionskoordinaten des Bediencontrollers (12) werden von der Kontrolleinrichtung (22) mittels einer bekannten Transformationsfunktion aus dem zweiten Bezugssystem (BZ-2) in transformierte Positionskoordinaten im ersten Bezugssystem (BZ-1) transformiert,
▪ aus den transformierten Positionskoordinaten des Bediencontrollers (12) im ersten Bezugssystem wird von der Kontrolleinrichtung (22) für das Messgerät (11) eine Startorientierung (32) bestimmt, wobei das Messgerät (11) in der Startorientierung (32) auf den Bediencontroller (12) ausgerichtet ist, und
▪ das Messgerät (11) wird gemäß einer voreingestellten Routine zum Suchen des Zielobjektes (14) bewegt.

2. Verfahren nach Anspruch 1, **dadurch gekennzeichnet, dass** während der Bewegung des Zielobjektes (14) entlang des Weges in M, M ≥ 2 Messpositionen (MPᵢ, i = 1 ... M) des Zielobjektes (14) mittels des Messgerätes (11) i-te Messkoordinaten (MKi, i = 1 ... M) im ersten Bezugssystem (BZ-1) des Messgerätes (11) bestimmt werden und in N, N ≥ 2 Positionen (Pⱼ, j = 1 ... N) des Bediencontrollers (12) mittels des GNSS-Empfängers (23) j-te GNSS-Koordinaten (Kⱼ, j = 1 ... N) des Bediencontrollers (12) im zweiten Bezugssystem (BZ-2) des GNSS-Empfängers (23) bestimmt werden, wobei die i-ten Messkoordinaten (MKᵢ) vom Messgerät (11) an die Kontrolleinrichtung (22) und die j-ten GNSS-Koordinaten (Kⱼ) vom GNSS-Empfänger (23) an die Kontrolleinrichtung (22) übermittelt werden.

3. Verfahren nach Anspruch 2, **dadurch gekennzeichnet, dass** den i-ten Messkoordinaten (MKi, i = 1 ... M) vom Messgerät (11) i-te Zeitstempel (tᵢ, i = 1 ... M) und den j-ten GNSS-Koordinaten (Kⱼ, j = 1 ... N) vom GNSS-Empfänger (23) j-te Zeitstempel (Tⱼ, j = 1 ... N) zugeordnet werden und die i-ten Zeitstempel (tᵢ) und j-ten Zeitstempel (Tⱼ) an die Kontrolleinrichtung (22) übermittelt werden.

4. Verfahren nach Anspruch 2, **dadurch gekennzeichnet, dass** den i-ten Messkoordinaten (MKᵢ, i = 1 ... M) von der Kontrolleinrichtung (22) i-te Zeitstempel (tᵢ, i = 1 ... M) und den j-ten GNSS-Koordinaten (Kⱼ, j = 1 ... N) von der Kontrolleinrichtung (22) j-te Zeitstempel (Tⱼ, j = 1 ... N) zugeordnet werden.

5. Verfahren nach einem der Ansprüche 3 bis 4, **dadurch gekennzeichnet, dass** i-ten Messkoordinaten (MKᵢ) von der Kontrolleinrichtung (22) j-te GNSS-Koordinaten (Kⱼ) zugeordnet werden, wenn die Zeitdifferenz (Δtᵢⱼ) zwischen dem i-ten Zeitstempel (tᵢ) der i-ten Messkoordinaten (MKᵢ) und dem j-ten Zeitstempel (Tⱼ) der j-ten GNSS-Koordinaten (Kⱼ) minimal ist.

6. Verfahren nach Anspruch 6, **dadurch gekennzeichnet, dass** i-ten Messkoordinaten (MKᵢ) von der Kontrolleinrichtung (22) j-te GNSS-Koordinaten (Kⱼ) zugeordnet werden, wenn die Zeitdifferenz (Δtᵢⱼ) zwischen dem i-ten Zeitstempel (tᵢ) der i-ten Messkoordinaten (MKᵢ) und dem j-ten Zeitstempel (Tⱼ) der j-ten GNSS-Koordinaten (Kⱼ) kleiner als eine voreingestellte maximale Zeitdifferenz (Δtₘₐₓ) ist.

7. Verfahren nach einem der Ansprüche 5 bis 6, **dadurch gekennzeichnet, dass** die Transformationsfunktion zwischen dem zweiten Bezugssystem (BZ-2) und dem ersten Bezugssystem (BZ-1) von der Kontrolleinrichtung (22) zumindest teilweise mittels der i-ten Messkoordinaten (MKi, i = 1 ... M) und der j-ten GNSS-Koordinaten (Kⱼ, j = 1 ... N) bestimmt wird.

8. Verfahren nach einem der Ansprüche 3 bis 4 mit den Schritten:
▪ die i-ten Messkoordinaten (MKᵢ, i = 1 ... M) und i-ten Zeitstempel (tᵢ, i = 1 ... M) werden von der Kontrolleinrichtung (22) als erste Datenpunkte bestimmt,
▪ für die ersten Datenpunkte wird von der Kontrolleinrichtung (22) eine erste Fitkurve angepasst,
▪ von der Kontrolleinrichtung (22) werden aus der ersten Fitkurve zu ersten Zeitpunkten (τ₁ₖ) erste Näherungskoordinaten bestimmt, wobei die ersten Zeitpunkte (τ₁ₖ) den j-ten Zeitstempeln (Tⱼ, j = 1 ... N) der j-ten GNSS-Koordinaten (Kⱼ, j = 1 ... N) entsprechen, und
▪ die Transformationsfunktion zwischen dem zweiten Bezugssystem (BZ-2) und dem ersten Bezugssystem (BZ-1) wird von der Kontrolleinrichtung (22) zumindest teilweise mittels der ersten Näherungskoordinaten und der j-ten GNSS-Koordinaten (Kⱼ, j = 1 ... N) bestimmt.

9. Verfahren nach einem der Ansprüche 3 bis 4 mit den Schritten:
▪ die j-ten GNSS-Koordinaten (Kⱼ, j = 1 ... N) und j-ten Zeitstempel (Tⱼ, j = 1 ... N) werden von der Kontrolleinrichtung (22) als zweite Datenpunkte bestimmt,
▪ für die zweiten Datenpunkte wird von der Kontrolleinrichtung (22) eine zweite Fitkurve angepasst,
▪ von der Kontrolleinrichtung (22) werden aus der zweiten Fitkurve zu zweiten Zeitpunkten (τ₂ₖ) zweite Näherungskoordinaten bestimmt, wobei die zweiten Zeitpunkte (τ₂ₖ) den i-ten Zeitstempel (tᵢ) der i-ten Messkoordinaten entsprechen, und
▪ die Transformationsfunktion zwischen dem zweiten Bezugssystem (BZ-2) und dem ersten Bezugssystem (BZ-1) wird von der Kontrolleinrichtung (22) zumindest teilweise mittels der i-ten Messkoordinaten (MKᵢ, i = 1 ... M) und zweiten Näherungskoordinaten bestimmt.

10. Verfahren nach einem der Ansprüche 3 bis 4 mit den Schritten:
▪ die i-ten Messkoordinaten (MKi, i = 1 ... M) und i-ten Zeitstempel (tᵢ, i = 1 ... M) werden von der Kontrolleinrichtung (22) als erste Datenpunkte bestimmt und für die ersten Datenpunkte wird von der Kontrolleinrichtung (22) eine erste Fitkurve angepasst,
▪ die j-ten GNSS-Koordinaten (Pⱼ, j = 1 ... N) und j-ten Zeitstempel (Tⱼ,j = 1 ... N) werden von der Kontrolleinrichtung (22) als zweite Datenpunkte bestimmt und für die zweiten Datenpunkte wird von der Kontrolleinrichtung (22) eine zweite Fitkurve angepasst,
▪ von der Kontrolleinrichtung (22) werden zu vorgegebenen Zeitpunkten (τₖ) aus der ersten Fitkurve erste Näherungskoordinaten und aus der zweiten Fitkurve zweite Näherungskoordinaten bestimmt und
▪ die Transformationsfunktion zwischen dem zweiten Bezugssystem (BZ-2) und dem ersten Bezugssystem (BZ-1) des Messgerätes (11) wird von der Kontrolleinrichtung (22) zumindest teilweise mittels der ersten Näherungskoordinaten und zweiten Näherungskoordinaten bestimmt.

11. Vorrichtung zur Durchführung eines Verfahrens zum Suchen eines Zielobjektes (14) nach einem der Ansprüche 1 bis 10, aufweisend ein Messgerät (11), eine Kontrolleinrichtung (22), einen Bediencontroller (12), der einen GNSS-Empfänger (23) aufweist, und eine Kommunikationsverbindung (13), die das Messgerät (11) und den Bediencontroller (12) miteinander verbindet.

12. Vorrichtung nach Anspruch 11, **dadurch gekennzeichnet, dass** der GNSS-Empfänger (23) fest im Bediencontroller (12) eingebaut ist.

13. Vorrichtung nach Anspruch 11, **dadurch gekennzeichnet, dass** der GNSS-Empfänger (23) über eine Datenschnittstelle (26) mit dem Bediencontroller (12) verbunden ist.
